# EUROPÄISCHE PATENTSCHRIFT

(11) **EP 1 940 746 B1**
(45) Veröffentlichungstag und Bekanntmachung des Hinweises auf die Patenterteilung: **20.10.2010**
(21) Anmeldenummer: 06829796.9
(22) Anmeldetag: 20.12.2006
(51) Int. Cl.: C02F 3/28, C02F 103/28

(54) **VERFAHREN ZUR AUFBEREITUNG VON PROZESSWASSER**
METHOD FOR THE RENOVATION OF PROCESS WATER
PROCEDE DE TRAITEMENT D'EAU DE FABRICATION

(30) Priorität: 21.12.2005 DE 102005061302
(43) Veröffentlichungstag der Anmeldung: 09.07.2008
(73) Patentinhaber: MERI Environmental Solutions GmbH, 81673 München (DE)
(72) Erfinder: MENKE, Lucas, 81545 München (DE); TROUBOUNIS, George, 80331 München (DE)
(74) Vertreter: Manitz, Gerhart
(86) Internationale Anmeldenummer: PCT/EP2006/012355
(87) Internationale Veröffentlichungsnummer: WO 2007/076943

(56) Entgegenhaltungen:
- EP-A- 1 097 908
- EP-A2- 1 120 380
- WO-A-03/031348
- WO-A-2006/035042
- DE-A1- 4 042 224
- DE-A1- 19 914 779
- DE-A1- 19 918 695
- US-A- 3 780 471
- RUDOLF PATT ET AL: "Ullmann's Encyclopedia of Industrial Chemistry, Paper and Pulp" 15. Juni 2000 (2000-06-15), INTERSCIENCE WILEY , INTERNET ONLINE HTTP://WWW.MRW.INTERSCIENCE.WILEY.COM/EMRW /9783527306732/SEARCH/FIRSTPAGE , XP002427399 Seite 100 - Seite 106 Seite 46

## Beschreibung

Die vorliegende Erfindung betrifft ein Verfahren zur Aufbereitung von im Kreislauf geführten Prozesswasser, insbesondere zur Aufbereitung von Prozesswasser bei der Papierherstellung.

Eine Aufbereitung von Prozesswasser ist auf vielen technischen Gebieten insbesondere in den Fällen notwendig, in denen das Prozesswasser in der entsprechenden Anlage im Kreislauf geführt wird, um eine Anreicherung des Prozesswassers mit Störstoffen zu verhindern. Dies gilt insbesondere auch für das Prozesswasser bei der Papierherstellung, und zwar sowohl bei der Papierherstellung aus Frischfasern als auch insbesondere bei der Papierherstellung aus Altpapier.

In den letzten Jahrzehnten wird Papier zunehmend aus Altpapier gewonnen, um den Energieverbrauch bei der Papierherstellung zu senken, und insbesondere, um den Verbrauch an natürlichen Ressourcen zu vermindern. Während zur Herstellung einer Tonne Primärfaserpapier rund 2,2 Tonnen Holz benötigt werden, kann der Holzbedarf beim Papierrecycling abhängig von dem Anteil der aus Altpapier stammenden Sekundärfasern, bezogen auf die Gesamtfasermenge in dem Recyclingpapier, drastisch vermindert bzw. auf null gesenkt werden. Zudem wird bei der Produktion von Recyclingpapier im Vergleich zu der Papierherstellung aus Primärfasern nur halb so viel Energie und nur ein Drittel an Frischwasser benötigt. Dennoch ist die Qualität von Recyclingpapier, beispielsweise hinsichtlich der Tintenfestigkeit, des Druckverhaltens, des Weißgrades und der Alterungsbeständigkeit, heute so hoch wie die von Primärfaserpapieren.

Bei der Papierherstellung aus Altpapier wird das Altpapier zunächst mit Wasser vermengt und in einem Pulper bzw. Stoffauflöser unter Rühren und Mischen zerkleinert, um die einzelnen Faserverbunde aufzulösen. Anschließend erfolgt eine Reinigung der Fasern, um nichtfasrige Fremdkörper aus dem Faserbrei zu entfernen, bevor die Fasern optional entfärbt werden und schließlich ggf. nach Zusatz eines geringen Anteils an Primärfasern auf einer Papiermaschine zu Papier verarbeitet werden. Eine entsprechende Anlage umfasst mithin eine Vorrichtung zur Aufbereitung von Altpapier und eine Papiermaschine, wobei die Altpapieraufbereitungsvorrichtung eine Altpapierauflöseeinheit bzw. einen Pulper, in der dem Altpapier Prozesswasser zum Auflösen und Zerkleinern der Fasern zugeführt wird, eine Sortiervorrichtung zur Entfernung von Verschmutzungen und eine Entwässerungseinheit zur Entfernung von Prozesswasser aufweist. Es ist auch bekannt, in der Anlage zwei oder mehr Altpapieraufbereitungsvorrichtungen bzw. Stufen, sogenannte Loops, vorzusehen, um die Qualität der aus dem Altpapier aufbereiteten Fasern zu erhöhen. Jeder Loop der Altpapieraufbereitungsvorrichtung und die Papiermaschine umfassen dabei vorzugsweise eine eigene Prozesswasseraufbereitungseinheit, wobei die einzelnen Prozesswasseraufbereitungseinheiten durch eine zwischen den einzelnen Loops vorgesehene Entwässerungseinrichtung voneinander entkoppelt sein können.

Um das Prozesswasser in jedem Loop im Kreislauf führen zu können und so den Frischwasserzusatz minimieren zu können, muss das Prozesswasser in den einzelnen Prozesswasseraufbereitungseinheiten in einem erforderlichen Ausmaß gereinigt werden. Hierzu umfassen die Prozesswasseraufbereitungseinheiten üblicherweise eine Stoffrückgewinnungseinheit und/oder eine Entstoffungseinheit, in der in dem Prozesswasser enthaltene Fasern aus dem Prozesswasser mechanisch abgetrennt werden, um vollständig oder teilweise in die Altpapieraufbereitungsvorrichtung zurückgeführt zu werden. Diese Stoffrückgewinnungseinheiten bzw. Entstoffungseinheiten sind üblicherweise als Sieb- und/oder Entspannungsflotationsanlagen ausgebildet.

Aus der DE 40 42 224 A1 ist eine Anlage zur Herstellung von Papier aus Altpapier bekannt, welche eine einen Loop umfassende Altpapieraufbereitungsvorrichtung sowie eine Papiermaschine umfasst. Die Altpapieraufbereitungsvorrichtung umfasst einen Pulper, in den Altpapier eingeführt und mit Prozesswasser versetzt wird, um das Altpapier aufzulösen, eine stromabwärts des Pulpers vorgesehene Sortierstufe, in der aus dem in dem Pulper hergestellten, suspendierten Faserstoff Verunreinigungen abgetrennt werden, eine Eindickungseinheit, um das Prozesswasser aus dem suspendierten Faserstoff weitestgehend zu entfernen, sowie eine Prozesswasseraufbereitungseinheit zur Reinigung des Prozesswassers. Die Prozesswasseraufbereitungseinheit wiederum besteht im Wesentlichen aus einer Grobreinigungsvorrichtung, einer, beispielsweise einen UASB-Reaktor umfassenden anaeroben Klärstufe sowie einer aeroben Klärstufe. Das in der Prozesswasseraufbereitungseinheit gereinigte Prozesswasser kann entweder als Abwasser entsorgt werden oder gemäß einer anderen Ausführungsform teilweise als Auflösewasser in den Pulper und teilweise in die Papiermaschine zurückgeführt werden, wobei in diesem Fall dem durch die Prozesswasseraufbereitungseinheit der Altpapieraufbereitungsvorrichtung geführten Prozesswasser ein Teilstrom von Rückwasser aus der Papiermaschine zugesetzt wird.

Die Prozesswasserkreisläufe der Papiermaschine und der Prozesswasseraufbereitungseinheit sind bei dieser Anlage somit nicht vollständig voneinander entkoppelt, so dass die Qualität des Prozesswassers in der Papiermaschine und die Qualität des Prozesswassers in der Altpapieraufbereitungsvorrichtung nicht effizient und unabhängig voneinander gesteuert werden können. Ein weiterer Nachteil der letztgenannten Ausführungsform ist, dass sich in dem Prozesswasser wegen der teilweise Kreislaufführung eine hohe Wasserhärte einstellt, welche den Betrieb des anaeroben UASB-Reaktors stören kann. In anaeroben Reaktoren werden nämlich Mikroorganismenpellets eingesetzt, für deren Funktion es wichtig ist, dass diese ein definiertes spezifisches Gewicht aufweisen, um während des Abbaus der organischen Verbindungen aus dem Prozesswasser durch das dabei gebildete Biogas, welches an den Mikroorganismenpellets anhaftet, in dem Reaktor nach oben steigen zu können, um an einem Gasabscheider das gebildete Biogas abzutrennen. Nach Abtrennung des Biogases darf das spezifische Gewicht insbesondere nicht so groß werden, dass die Mikroorganismenpellets bis auf den Boden des Reaktors absinken, da diese sonst nicht mehr an dem Reinigungsprozess teilnehmen können. Aufgrund ihrer Struktur und Größe wirken Mikroorganismenpellets jedoch als Kriställisationskeime für Kalkablagerungen, so dass sich bei einer gewissen Wasserhärte und bei entsprechenden pH-Werten auf den Mikroorganismenpellets Kalk abscheidet, wobei diese Ablagerungen zu einer unkalkulierbaren Verschiebung des spezifischen Gewichts der Pellets führen, weswegen diese ihre Funktion nicht mehr wahrnehmen können. Auch die Stoffwechseltätigkeit der anaeroben Mikroorganismen bewirkt eine Verschiebung des Kalk-Kohlensäure-Gleichgewichts durch die Erzeugung von unter anderem Hydrogencarbonat (HCO₃-), was eine Kalkausfällung auf den Mikroorganismenpellets weiter begünstigt. Um trotz der Kalkausfällung auf den Mikroorganismenpellets deren Funktion sicherzustellen, müssten die Rezirkulationsmengen in dem anaeroben Reaktor vergrößert werden, um die Pellets trotz größerem spezifischen Gewicht in dem Reaktor in Schwebe zu halten. Der Rezirkulationsmenge sind aber einerseits durch die hydraulische Kapazität der Separatoren und andererseits durch die Notwendigkeit, die Strömung in dem Reaktor laminar zu halten, Grenzen gesetzt. Höhere Rezirkulationsmengen bewirken außerdem durch die Entstehung von Druckgradienten saug- und druckseitig der Pumpe in der Rezirkulationsleitung das Entweichen von Kohlendioxid und dadurch eine weitere Verschiebung des Kalk-Kohlensäure-Gleichgewichts in Richtung einer Kalkausfällung.

Aus der EP 1 120 380 A2 ist ein Verfahren zur aeroben Aufbereitung von organisch beladenem Wasser und/oder zur Enthärtung von Wasser bekannt, bei dem aufwärts strömendes Wasser mit sauerstoffhaltiger Druckluft im Gleichstrom in einer Belüftungszone belüftet wird, die Druckluft gegebenenfalls mit darin enthaltenem, aus dem Wasser stammenden Kohlendioxid abgeführt wird, sich bildende Schlammflocken und gegebenenfalls ausfällendes Calciumcarbonat bzw. Magnesiumcarbonat in einer Sedimentationszone bis in eine Ruhezone hinein absinken können, wobei das Wasser in der Sedimentationszone abwärts strömt, und der überwiegende Teil des Wassers von der Sedimentationszone in die Belüftungszone überführt wird.

In der DE 199 14 779 A1 wird ein Verfahren zur Aufbereitung des Wasserkreislaufes von Papiermaschinen beschrieben, bei dem von dem aus der Papiermaschine austretenden Abwasser die Feststoffe abgetrennt und das gereinigte Wasser und ein Teil der Feststoffe dem Prozess erneut zugeführt wird, wobei das Abwasser in einem ersten Abtrennverfahrensschritt in eine Faserstoff-Fraktion und eine Feinstoff-Fraktion getrennt wird, wobei die Faserstoff-Fraktion wieder dem Produktionsprozess zugeführt wird, die Feinstoff-Fraktion einem zweiten getrennten Abtrennverfahrensschritt unterzogen wird, in dem die Feinstoffe aus dem Wasser abgetrennt werden, wobei ein einstellbarer Anteil wieder dem Produktionsprozess zugeführt wird, und wahlweise vor dem zweiten Abtrennverfahrensschritt Hilfsmittel zudosiert werden, die in dem zweiten Abtrennverfahrensschritt die Abtrennung und Entfernung von gelösten, kollodialen oder anderen Störstoffen erlauben, die dann ganz oder teilweise aus dem Produktionsprozess geführt werden.

Aufgabe der vorliegenden Erfindung ist es daher, eine Anlage zur Aufbereitung von Prozesswasser sowie ein entsprechendes Verfahren bereitzustellen, bei dem das Prozesswasser effizient gereinigt wird, bei dem insbesondere die Wasserhärte und die Qualität des Prozesswassers gezielt gesteuert werden kann und welches insbesondere auch für die Aufbereitung von Prozesswasser mit einer hohen Wasserhärte, wie Prozesswasser in einer Anlage zur Herstellung von Papier aus Altpapier, geeignet ist. Insbesondere soll das aufbereitete Prozesswasser so gereinigt sein, dass eine Störung des Betriebs eines anaeroben Reaktors durch Kalkausfällungen zuverlässig vermieden werden.

Erfindungsgemäß wird diese Aufgabe gelöst durch ein Verfahren zur Aufbereitung von im Kreislauf geführten Prozesswasser bei der Papierherstellung umfassend wenigstens einen Prozesswasseraufbereitungsschritt, bei dem wenigstens ein Teil des dem Prozesswasserauf bereitungsschritt kontinuierlich zugeführten Prozesswassers einem Reinigungsschritt in einem mit anaeroben Mikroorganismen versetzten anaeroben Reaktor sowie einem Entkalkungsschritt, bei dem das Prozesswasser einem Druckentspannungsflotationsschritt unterzogen wird, unterzogen wird, wobei das Verfahren in einer Anlage umfassend wenigstens eine Prozesswasseraufbereitungseinheit durchgeführt wird, wobei wenigstens eine der Prozesswasseraufbereitungseinheiten eine Filtrationseinheit, einen mit anaeroben Mikroorganismen versetzten anaeroben Reaktor sowie eine Kalkeliminationseinheit aufweist, wobei die Kalkeliminationseinheit stromabwärts des anaeroben Reaktors angeordnet ist und die Filtrationseinheit stromabwärts der Kalkeliminationseinheit sowie stromabwärts des anaeroben Reaktors angeordnet ist.

Indem das Prozeßwasser einem Reinigungsschritt in einem mit anaeroben Mikroorganismen versetzten anaeroben unterzogen wird, können die in dem Prozesswasser enthaltenen Verunreinigungen, insbesondere die organischen und biologischen Verunreinigungen, effizient entfernt werden. Aufgrund der dadurch erzielten Reinheit kann das Prozesswasser vollständig bzw. zumindest nahezu vollständig im Kreislauf geführt werden, ohne dass sich die Verunreinigungen durch die Kreislaufführung anreichern. Dies erlaubt eine Minimierung des Frischwasserbedarfs der Anlage. Indem das Prozeßwasser zudem einem Entkalkungsschritt unterzogen wird, kann zudem die Wasserhärte in dem im Kreislauf geführten Prozesswasser so gesteuert werden, dass in dem anaeroben Reaktor keine die darin enthaltenden Mikroorganismenpellets störenden Kalkablagerungen entstehen, wodurch die Effizienz des Verfahrens optimiert wird. Insgesamt ermöglicht das erfindungsgemäße Verfahren somit eine zumindest nahezu vollständige Kreislaufführung des Prozesswassers und die effiziente Steuerung der Qualität des Prozesswassers. Ein weiterer Vorteil des erfindungsgemäßen Verfahrens besteht darin, dass das anaerob behandelte Prozesswasser mit anaeroben Mikroorganismen beladen ist, die in aerober Umgebung, wie sie beispielsweise in den Prozessstufen und den Behältern der Stoffaufbereitung vorliegen, nicht oder in nicht nennenswerten Umfang überleben können, so dass ein Bewuchs der entsprechenden Anlagenteile mit Mikroorganismen, wie dieser bei aerobe Mikroorganismen umfassende Reaktoren enthaltenden Anlagen vorkommt, zuverlässig verhindert werden kann.

Grundsätzlich kann das Prozesswasseraufbereitungs verfahren gemäß der vorliegenden Erfindung in jeder Anlagen durchgeführt werden, in der Prozesswasser im Kreislauf geführt wird. Insbesondere bei der Papierherstellung wird das Prozesswasser mit signifikanten Mengen an Verunreinigungen belastet, weswegen das erfindungsgemäße Verfahren zur Reinigung von bei der Papierherstellung anfallenden Prozesswasser geeignet ist, unabhängig davon, ob es sich um Prozesswasser einer Anlage zur Herstellung von Papier aus Frischfasern oder um Prozesswasser einer Anlage zur Herstellung von Papier aus Altpapier handelt.

In diesem Fall kann die Anlage*,* in der das erfindungsgemäße Verfahren durchgeführt wird, neben wenigstens einer Prozesswasseraufbereitungseinheit wenigstens eine Stoffaufbereitungsvorrichtung und/oder wenigstens eine Papiermaschine umfassen, wobei der wenigstens einen Stoffaufbereitungsvorrichtung und/oder der wenigstens einen Papiermaschine wenigstens eine der Prozesswasseraufbereitungseinheiten umfassend einen mit anaeroben Mikroorganismen versetzten anaeroben Reaktor sowie eine Kalkeliminationseinheit zugeordnet ist.

Insbesondere wenn es sich bei der Anlage um eine Anlage zur Herstellung von Papier aus Altpapier handelt, weist diese vorzugsweise eine Altpapieraufbereitungsvorrichtung als Stoffaufbereitungsvorrichtung zur Herstellung von Faserstoff aus dem Altpapier und/oder eine Papiermaschine zur Herstellung von Papier aus dem Faserstoff auf, wobei die Altpapieraufbereitungsvorrichtung eine oder mehrere Stufen aufweist und wenigstens eine dieser Stufen und/oder die Papiermaschine eine eigene Prozesswasseraufbereitungseinheit umfassen, wobei die wenigstens eine der Prozesswasseraufbereitungseinheiten einen mit anaeroben Mikroorganismen versetzten anaeroben Reaktor sowie eine Kalkeliminationseinheit umfasst. Insbesondere, wenn die Papiermaschine und jede Stufe bzw. jeder Loop der Altpapieraufbereitungsvorrichtung eine einen anaeroben Reaktor sowie eine Kalkeliminationseinheit umfassende Prozesswasseraufbereitungseinheit enthalten, kann die Prozesswasserqualität, also die Menge der in dem Prozesswasser enthaltenen Verunreinigungen, für jeden Loop separat gesteuert werden. Hierdurch wird ein optimales Qualitäts-Wasser-Management bei der Papierherstellung aus Altpapier ermöglicht.

Um eine effiziente Ausnutzung des in der Anlage eingesetzten Altpapiers sowie der darin enthaltenen Fasern zu erreichen, wird vorgeschlagen, in der wenigstens einen Prozesswasseraufbereitungseinheit des weiteren eine Stoffrückgewinnungseinheit und/oder eine Entstoffungseinheit vorzusehen. Gute Ergebnisse werden insbesondere erreicht, wenn die Stoffrückgewinnungseinheit bzw. die Entstoffungseinheit als eine Kombination von Stoffrückgewinnungsvorrichtung (z.B. eine Vorrichtung mit Siebbarriere) und Mikroflotationsvorrichtung (oder Druckentspannungsflotationsvorrichtung) in Serie als Kaskade ausgebildet ist. In der ersten Stufe, welche vorzugsweise als Sprühfiltration ausgebildet ist, werden die brauchbaren Fasern zurückgewonnen, wohingegen in der zweiten Stufe, nämlich der Entstoffung, die Feinstoffe aus dem Prozesswasser entfernt werden.

Erfindungsgemäß umfasst die wenigstens eine Prozesswasseraufbereitungseinheit ferner eine Filtrationseinheit, um in dem Prozesswasser enthaltene Feststoffpartikel abzutrennen. Dabei ist diese Filtrationseinheit stromabwärts der Kalkeliminationseinheit sowie stromabwärts des anaeroben Reaktors angeordnet.

Erfindungsgemäß ist die Kalkeliminationseinheit in der wenigstens einen Prozesswasseraufbereitungseinheit stromabwärts des anaeroben Reaktors angeordnet sein. Da die Massefracht, d.h. die Konzentration an Feststoffen in dem Prozesswasser, stromabwärts des anaeroben Reaktors geringer als stromaufwärts des anaeroben Reaktors ist, ist die Anordnung der Kalkeliminationseinheit stromabwärts des anaeroben Reaktors insbesondere bei Papierherstellungsanlagen vorteilhaft, mit denen graphische Papiere hergestellt werden.

Besonders gute Ergebnisse werden hinsichtlich der Entfernung von Verunreinigungen aus dem Prozesswasser insbesondere auch deshalb erzielt, weil das Prozeßwasser in dem Entkalkungsschritt erfindungsgemäß einem Druckentspannungsflotations schritt unterzogen wird. Bei der Druckentspannungsflotation wird das zu behandelnden Prozesswasser vorzugsweise zunächst durch Zugabe eines pH-Einstellmittels, beispielsweise Natronlauge, auf einen für die Kalkbildung geeigneten neutralen oder alkalischen pH-Wert, welcher vorzugsweise zwischen 7 und 10, besonders bevorzugt zwischen 7 und 9 und ganz besonders bevorzugt zwischen 7,5 und 8,5 liegt, eingestellt. Optional können dem Wasser zur Erleichterung der Kalkbildung Fällungsmittel und/oder Flockungshilfsmittel zugesetzt werden. Anschließend wird der so erzeugten Mischung Druckgas, vorzugsweise Druckluft, zugesetzt und wird diese Mischung mit Druck beaufschlagt, bevor die mit Druck beaufschlagte Mischung in einem Druckentspannungsflotationsreaktor entspannt bzw. einem verminderten Druck ausgesetzt wird, wodurch das vorher zugesetzte Druckgas zumindest weitestgehend in Form von Gasblasen aus dem Wasser ausperlt und nach oben strömt. Dabei reißen die Gasblasen die in dem Wasser enthaltenen Kalkflocken mit, so dass diese von dem Wasser abgetrennt werden.

Um eine effiziente Kalkabtrennung zu erreichen wird in Weiterbildung des Erfindungsgedankens vorgeschlagen, bei dem Druckentspannungsflotationsschritt die Druckdifferenz zwischen der Druckbeaufschlagung und der Entspannung auf wenigstens 2 bar, bevorzugt wenigstens 3 bar, besonders bevorzugt wenigstens 4 bar und ganz besonders bevorzugt wenigstens 5 bar einzustellen Je größer die vorgenannte Druckdifferenz, desto kleiner sind die bei der Entspannung entstehenden Gasperlen, so dass aufgrund des größeren Oberflächen- zu Volumenverhältnisses der Gasblasen eine erhöhte Kalkabtrennung erreicht wird.

Vorzugsweise umfasst die Druckentspan-nungsflotationsvorrichtung eine Fällungseinrichtung, in der durch Zugabe einer aus der aus pH-Einstellmitteln, Fällungsmitteln, Flockungshilfsmitteln und beliebigen Kombinationen hiervon bestehenden Gruppe ausgewählten Substanz Kalk aus dem Prozesswasser ausgefällt wird, sowie eine Kalkabtrenneinrichtung, in der ausgefällter Kalk aus dem Prozesswasser abgetrennt wird. Beispielsweise kann die Fällungseinrichtung eine pH-Wert-Einstelleinrichtung sowie eine Zufuhrleitung für Fällungsmittel und/oder Flockungshilfsmittel umfassen, wohingegen die Kalkabtrenneinrichtung vorzugsweise eine Zumischeinheit für Druckgas, einen Gaslösungsreaktor zur physikalischen Lösung des Druckgases in dem Prozesswasser sowie einen Druckentspannungsflotationsreaktor aufweist.

Alternativ zu der vorgenannten Ausführungsform kann die Kalkelimination nach entsprechender Fällung auch mittels Zentrifugalkraft, beispielsweise mit einer Zentrifuge oder mit einem Zyklon, erfolgen.

Um bei der vorgenannten Ausführungsform eine homogene Vermischung des Prozesswassers mit der aus der aus pH-Einstellmitteln, Fällungsmitteln, Flockungshilfsmitteln und beliebigen Kombinationen hiervon bestehenden Gruppe ausgewählten Substanz zu erreichen, weist die Anlage bevorzugt eine Mischeinheit zur homogenen Einmischung der vorgenannten wenigstens einen Substanz auf.

Bei der vorgenannten Ausführungsform sind sowohl die Fällungseinrichtung als auch die Kalkabtrenneinrichtung stromabwärts des anaeroben Reaktors angeordnet sein.

Als mit anaeroben Mikroorganismen versetzter anaerober Reaktor können alle dem Fachmann bekannten Typen an anaeroben Reaktoren eingesetzt werden, beispielsweise Kontaktschlammreaktoren, UASB-Reaktoren, EGSB-Reaktoren, Festbettreaktoren und Fließbettreaktoren, wobei insbesondere mit UASB-Reaktoren und EGSB-Reaktoren gute Ergebnisse erzielt werden. Dem anaeroben Reaktor kann ein Vorversäuerungsreaktor vorgeschaltet sein, in dem das Prozesswasser vor der Zuführung in den anaeroben Reaktor einer Acidogenese und/oder einer Hydrolyse unterworfen wird. Während bei der enzymatischen Hydrolyse Polymere, wie beispielsweise Polysaccharide, Polypeptide und Fette, durch aus Mikroorganismen stammende Exoenzyme zu deren Monomeren, wie Zucker, Aminosäuren und Fettsäuren, abgebaut werden, werden diese Monomere bei der Acidogenese durch acidogene Mikroorganismen in organischer Säuren, Alkohole, Aldehyde, Wasserstoff und Kohlendioxid umgewandelt.

Die Stoffaufbereitungsvorrichtung der Anlage, in der das erfindungsgemäße Verfahren durchgefütert wird, kann eine oder mehrere Stufen umfassen, wobei insbesondere mit 1 bis 3 Stoffaufbereitungsstufen umfassenden Anlagen gute Ergebnisse erzielt werden, wobei die einzelnen Stufen untereinander vorzugsweise durch eine Entwässerungsstufe voneinander entkoppelt sind. Besonders bevorzugt umfasst die Stoffaufbereitungsvorrichtung zwei voneinander entkoppelte Stufen. In dem Fall einer Anlage zur Herstellung von Papier aus Altpapier, bei der die Stoffaufbereitungsvorrichtung als Altpapieraufbereitungsvorrichtung ausgestaltet ist, ist/sind die Stoffaufbereitungsstufen als Altpapieraufbereitungsstufen ausgebildet.

Unabhängig von der Anzahl der Stufen der Stoffaufbereitungsvorrichtung ist es vorteilhaft wenn bei einer Anlage zur Herstellung von Papier sowohl wenigstens eine der Stufen der Stoffaufbereitungsvorrichtung als auch die Papiermaschine jeweils eine eigene Prozesswasseraufbereitungseinheit umfassen, wobei die einzelnen Prozesswasseraufbereitungseinheiten jeweils einen anaeroben Reaktor sowie eine Kalkeliminationseinheit aufweisen.

In Weiterbildung des Erfindungsgedankens wird vorgeschlagen, dass alle Stufen der Stoffaufbereitungsvorrichtung und die Papiermaschine jeweils eine eigene Prozesswasseraufbereitungseinheit umfassen, wobei die einzelnen Prozesswasseraufbereitungseinheiten jeweils einen anaeroben Reaktor sowie eine Kalkeliminationseinheit aufweisen. Indem die Papiermaschine und jede Stufe bzw. jeder Loop der Stoffaufbereitungsvorrichtung eine, einen anaeroben Reaktor sowie eine Kalkeliminationseinheit umfassende Prozesswasseraufbereitungseinheit enthalten, kann die Prozesswasserqualität, also die Menge der in dem Prozesswasser enthaltenen Verunreinigungen, für jeden Loop separat gesteuert werden. Hierdurch wird ein optimales Qualitäts-Wasser-Management bei der Papierherstellung ermöglicht.

Vorzugsweise umfasst die Anlage, in der das erfindungsgemäße Verfahren durchgeführt wird, ferner eine Abwasserreinigungsvorrichtung, über die ein Teil des im Kreislauf geführten Prozesswassers gereinigt und aus der Anlage abgeführt wird, um diesen Teil durch Frischwasser zu ersetzen.

Dabei kann die Abwasserreinigungsvorrichtung eine oder mehrere Einrichtungen umfassen, welche aus der aus Entstoffungseinheiten, Kühleinheiten, biologischen Abwasserbehandlungseinheiten und beliebigen Kombinationen hiervon bestehenden Gruppe ausgewählt sind.

Vorzugsweise ist in der Anlage bei der vorgenannten Ausführungsform eine von der Abwasserreinigungsvorrichtung in die Stoffaufbereitungsvorrichtung und/oder in die Papiermaschine zurückführende Teilstromleitung vorgesehen.

Vorzugsweise kommt das dem Prozesswasseraufbereitungsschritt kontinuierlich zugeführte Prozesswasser aus einer Stoffaufbereitungsvorrichtung, beispielsweise einer Altpapieraufbereitungsvorrichtung, und/oder einer Papiermaschine.

Das erfindungsgemäße Verfahren wird vorzugsweise in der zuvor beschriebenen Anlage durchgeführt.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische Ansicht einer Anlage zur Herstellung von Papier aus Altpapieir, welche zur Durchführung des erfindungsgemäßen Verfahrens geeignet ist und
- Fig. 2: eine schematische Ansicht einer Stufe einer Stoffaufbe- reitungsvorrichtung gemäß eines zweiten Ausführungsbei- spiels der vorliegenden Erfindung.

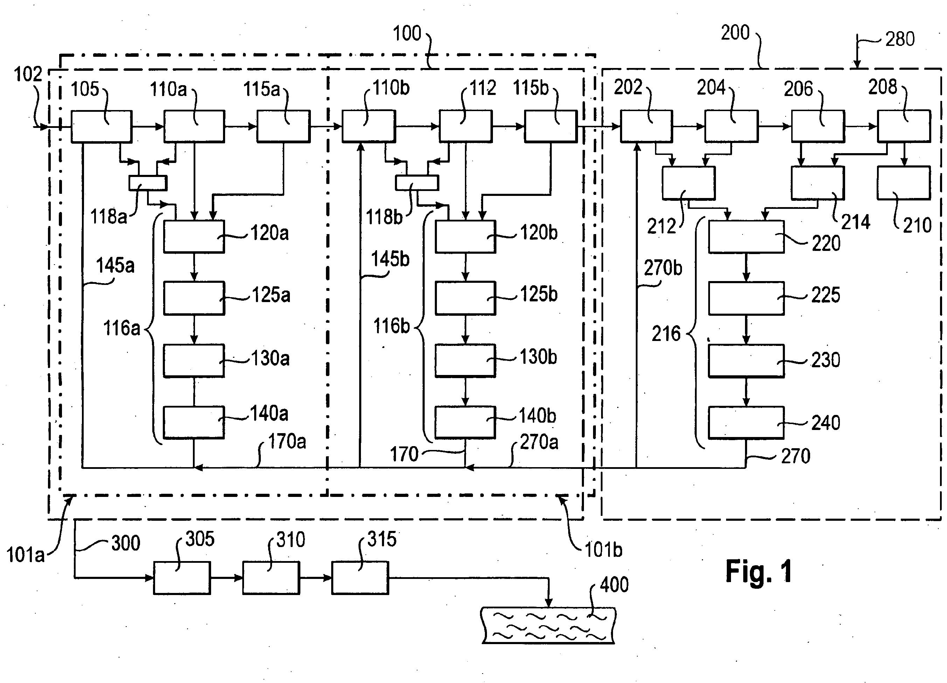

Die in der Fig. 1 gezeigte Anlage umfasst eine Altpapieraufbereitungsvorrichtung 100 sowie eine stromabwärts davon angeordnete, mit der Altpapieraufbereitungsvorrichtung 100 verbundene Papiermaschine 200. Dabei umfasst die Altpapieraufbereitungsvorrichtung 100 zwei voneinander im Wesentlichen entkoppelte und in der Fig. 1 durch die punktgestrichelten Kästen angedeutete Stufen bzw. Loops 101a und 101b.

Die erste Stufe 101a der Papieraufbereitungsvorrichtung 100 umfasst einen Rohstoffeinlass 102, einen Pulper bzw. Stoffauflöser 105, eine Sortiereinrichtung 110a sowie eine Entwässerungseinheit 115a, welche sequentiell angeordnet und jeweils miteinander verbunden sind. Unter Pulper bzw. Stoffauflöser 105 wird im Sinne der vorliegenden Erfindung nicht nur eine, wie in der Fig. 1 schematisch gezeigt, aus einem Vorrichtungsteil bestehende Einrichtung verstanden, sondern insbesondere auch eine mehrere einzelne Vorrichtungsteile umfassende Vorrichtungskombination, welche alle für die Stoffauflösung notwendigen Bauteile bzw. Aggregate beinhaltet. Gleiches gilt auch für die Sortiereinrichtung 110a, die Entwässerungseinheit 115a und alle anderen in der Fig. 1 gezeigten Bauteile.

Der Stoffauflöser 105 und die Sortiereinrichtung 110a sind jeweils über eine Leitung mit einer Rejektbehandlungseinheit 118a verbunden.

Zudem umfasst die erste Stufe 101a der Altpapieraufbereitungsvorrichtung 100 eine Prozesswasseraufbereitungseinheit 116a, der über entsprechende Leitungen aus der Rejektbehandlungseinheit 118a, aus der Sortiervorrichtung 110a sowie aus der Entwässerungseinheit 115a das in diesen Anlagenteilen anfallende Prozesswasser zugeführt wird. Dabei kann die Sortiervorrichtung 110a auch eine Reihe von Sortiereinrichtungen (nicht dargestellt) umfassen. Die Prozesswasseraufbereitungseinheit 116a besteht aus einer Stoffrückgewinnungseinheit 120a, einem mit anaeroben Mikroorganismen versetzten anaeroben Reaktor 125a, einer Kalkeliminationseinheit 130a sowie einer Filtrationseinheit 140a, welche sequentiell angeordnet und miteinander verbunden sind. Von der Filtrationseinheit 140a führt eine Rückführleitung 145a zu dem Stoffauflöser 105 zurück. Zusätzlich zu der Stoffrückgewinnungseinheit 120a oder anstelle der Stoffrückgewinnungseinheit 120a kann in der Altpapieraufbereitungsvorrichtung 100 eine Entstoffungseinheit (nicht dargestellt) vorgesehen sein.

Im Unterschied zu der ersten Stufe 101a umfasst die zweite Stufe 101b der Altpapieraufbereitungsvorrichtung 100 eine mit der Entwässerungseinheit 115a verbundene Sortiervorrichtung 110b, eine Oxidatioriseinheit bzw. Reduktionseinheit 112 sowie eine Entwässerungseinheit 115b, welche sequentiell angeordnet und miteinander verbunden sind. Zudem weist zweite Stufe 101b eine Prozesswasseraufbereitungseinheit 116b auf, welche analog zu der Prozesswasseraufbereitungseinheit 116a der ersten Stufe 101a aufgebaut ist, wobei die Filtrationseinheit 140b der zweiten Stufe 101b der Altpapieraufbereitungsvorrichtung 100 über eine Rückführleitung 145b mit der Sortiervorrichtung 110b und über eine Teilstromleitung 170a mit der aus der Filtrationseinheit 140a kommenden Rückführleitung 145a der ersten Stufe 101a der Altpapieraufbereitungsvorrichtung 100 verbunden ist. Während die Sortiervorrichtung 110b und die Oxidationseinheit bzw. Reduktionseinheit 112 über entsprechende Leitungen mit einer Rejektbehandlungseinheit 118b verbunden sind, ist die Entwässerungseinheit 115b direkt mit der Stoffrückgewinnungseinheit 120b der Prozesswasseraufbereitungseinheit 116b verbunden. Zudem führt eine Leitung von der Oxidationseinheit bzw. Reduktionseinheit 112 zu der Stoffrückgewinnungseinheit 120b.

Die Papiermaschine 200 umfasst einen Zentrifugalsortierer 202, eine Feinsortiervorrichtung 204, eine Papiermaschinen-Formpartie 206, eine Papiermaschinen-Presspartie 208 sowie eine Trockenpartie 210, welche sequentiell angeordnet und miteinander verbunden sind. Der Zentrifugalsortierer 202 sowie die Feinsortiervorrichtung 204 sind mit einer Rejektbehandlungseinheit 212 verbunden und die Papiermaschinen-Formpartie 206 sowie die Papiermaschinen-Presspartie 208 sind mit einer Faserrückgewinnungseinheit 214 verbunden. Zudem sind die Rejektbehandlungseinheit 212 sowie die Faserrückgewinnungseinheit 214 über entsprechende Leitungen mit einer Prozesswasseraufbereitungseinheit 216 verbunden, welche aus einer Entstoffungseinheit 220, einem mit anaeroben Mikroorganismen versetzten anaeroben Reaktor 225, einer Kalkeliminationseinheit 230 und einer Filtrationseinheit 240 besteht. Zudem führt eine Rückführleitung 270 von der Filtrationseinheit 240 der Papiermaschine 200 in die Leitung 170 der zweiten Stufe 101b der Altpapieraufbereitungsvorrichtung 100. Die Faserrückgewinnungseinheit 214 und die Entstoffungseinheit 220 können auch in einem beispielsweise als Mikroflotation ausgebildeten Vorrichtungsteil kombiniert sein.

Ferner ist in dem Bereich der Papiermaschine 200 eine Frischwasserzufuhrleitung 280 vorgesehen, über welche der Papiermaschine Frischwasser zugeführt werden kann. Dabei kann die Frischwasserzufuhrleitung 280 an verschiedenen Stellen in der Papiermaschine 200 münden, beispielsweise in der Zufuhrleitung zu dem Zentrifugalsortierer 202 und/ oder in der Papiermaschinen-Formpartie 206 und/oder der Papiermaschinen-Presspartie 208, weswegen die genaue Position der Frischwasserzufuhrleitung 280 in der Fig. 1 nicht dargestellt ist. Zudem ist in der Anlage eine Abwasserleitung 300 vorgesehen, über die Abwasser aus der Anlage abgeführt werden kann. Auch die Abwasserleitung 300 kann an verschiedenen Positionen der Anlage angeordnet sein, beispielsweise an der Leitung 170, weswegen auch die genaue Position der Abwasserleitung 300 in der Fig. 1 nicht dargestellt ist. Die Abwasserleitung 300 führt in eine mechanische Entstoffungseinheit 305, der eine Kühleinheit 310 sowie eine biologische Abwasserreinigungseinheit 315 nachgeschaltet ist. Von der biologischen Abwasserreinigungseinheit 315, welche eine Kalkeliminationseinheit und eine Filtrationseinheit umfassen kann, führt eine Leitung in ein öffentliches Gewässer 400, beispielsweise in einen Fluss; es kann jedoch auch ein Telstrom hiervon bei Bedarf in die Papiermaschine oder die Stoffaufbereitung zurückgeführt werden.

Beim Betrieb der Anlage wird kontinuierlich Altpapier über den Rohstoffeinlass 102 in den Stoffauflöser 105 der ersten Stufe 101a der Altpapieraufbereitungsvorrichtung 100 eingeführt, in dem das Altpapier mit über die Rückführleitung 145a zugeführten Prozesswasser vermischt und zur Gewinnung der Fasern zerkleinert wird. Während die in dem Stoffauflöser 105 gewonnenen Fasern als Fasersuspension kontinuierlich in die Sortiervorrichtung 110a überführt werden, wird das in dem Stoffauflöser 105 anfallende Prozesswasser, welches Reste an Fasern enthalten kann zunächst in die Rejektbehandlungseinheit 118a geführt und von dort nach Abtrennung der Rejekte in die Stoffrückgewinnungseinheit 120a der Prozesswasseraufbereitungseinheit 116a der Altpapieraufbereitungsvorrichtung 100 geleitet. In der Sortiervorrichtung 11a werden aus der Fasersuspension, beispielsweise durch Siebbarrieren und typischerweise mehrstufig, leichte oder schwere Ungehörigkeiten, welche größer als Fasern sind, wie beispielsweise grobe Verschmutzungen in Form von Plastikfolien und Plastikstücken, aussortiert. Zudem kann in der Sortiervorrichtung 110a auch eine Flotation zum Zweck der Elimination von Pigmenten, Tinte und Farbpartikeln (de-inking) durchgeführt werden. Zudem können bei der Stoffwäsche Feinstoffe und Asche abgetrennt werden. In der stromabwärts der Sortiervorrichtung 110a angeordneten Entwässerungseinheit 115a, welche vorzugsweise als Entwässerungsfilter und/oder als Schneckenpresse ausgebildet ist, wird die Fasersuspension durch Entfernen von Prozesswasser eingedickt, um als eingedickte Fasersuspension von der Entwässereinheit 115a in die Sortiervorrichtung 110b der zweiten Stufe 101b der Altpapieraufbereitungsvorrichtung 100 zu gelangen. Ein Teilstrom des in der Sortiervorrichtung 110a anfallenden Prozesswassers wird in die Rejektbehandlungseinheit 118a geführt, wohingegen der andere Teilstrom des in der Sortiervorrichtung 110a anfallenden Prozesswassers zusammen mit dem in der Entwässerungseinheit 115a der ersten Stufe 101a anfallenden Prozesswasser über entsprechende Leitungen direkt in die Stoffrückgewinnungseinheit 120a der Prozesswasseraufbereitungseinheit 116a der ersten Stufe 101a der Altpapieraufbereitungsvorrichtung 100 geführt wird, in der aus dem Prozesswasser darin enthaltene Faserstoffe abgetrennt werden, welche erneut dem Aufbereitungsprozess zugeführt werden. Vorzugsweise ist die Stoffrückgewinnungseinheit 120a als Druckentspannungsflotationsvorrichtung ausgestaltet.

Alternativ dazu kann ein Teilstrom des aus der Entwässerungseinheit 115a abgezogenen Prozesswassers oder das gesamte aus der Entwässerungseinheit 115 a abgezogene Prozesswasser direkt, d.h. unter Umgehung der Prozesswasseraufbereitungseinheit 116a, in den Stoffauflöser 105 zurückgeleitet werden. Insbesondere bei der Papieraufbereitung, bei der das Prozesswasser eine geringe Feststoffkonzentration aufweist, wie beispielsweise bei der Herstellung von graphischem Papier, kann die Stoffrückgewinnungseinheit 120a, 120b bzw. Entstoffungseinheit 122, 220 entfallen.

Bei der in der Fig. 1 dargestellten Anlage wird das in der Rejektbehandlungseinheit 118a anfallende Prozesswasser in die Stoffrückgewinnungseinheit 120a geleitet. Alternativ dazu ist es jedoch auch möglich, dass in der Rejektbehandlungseinheit 118a anfallende Prozesswasser als Abwasser aus der Altpapieraufbereitungsvorrichtung 101a abzuführen und beispielsweise über die Abwasserleitung 300 in die mechanische Entstoffungseinheit 305 und anschließend durch die Kühleinheit 310 sowie die biologische Abwasserreinigungseinheit 315 zu führen.

Von der Stoffrückgewinnungseinheit 120a wird kontinuierlich von Faserstoffen befreites Prozesswasser in den mit anaeroben Mikroorganismen versetzten anaeroben Reaktor 125a geleitet, in dem chemische und biologische Verunreinigungen durch die Wirkung der anaeroben Mikroorganismen in dem Prozesswasser abgebaut werden. Dabei kann dem anaeroben Reaktor 125a zwecks Einstellung des Prozesswassers auf einen optimalen Temperaturbereich eine Kühlstufe (nicht dargestellt) und ein Vorversäuerungsreaktor (nicht dargestellt), in dem das Prozesswasser einer Acidogenese und/oder Hydrolyse unterworfen wird, vorgeschaltet sein. Aus dem anaeroben Reaktor 125a wird das so von den chemischen und biologischen Verunreinigungen befreite Prozesswasser in die stromabwärts gelegene Kalkeliminationseinheit 130a geleitet, welche als Druckentspannungsflotationsvorrichtung ausgebildet ist. In dieser Kalkeliminationseinheit 130a werden die in dem Prozesswasser vorliegenden Carbonate und Hydrogencarbonate weitestgehend als Kalk ausgefällt und aus dem Prozesswasser entfernt. Zudem findet in der Kalkeliminationseinheit 130a eine so genannte "Flash-Oxidation" statt, bei der in dem anaeroben Reaktor 125a gebildete Stoffwechselendprodukte der Mikroorganismen durch die zugeführte gelöste Luft bzw. durch Luftübersättigung oxidiert werden, wodurch ein zusätzlicher oxidativer Abbau der in dem Prozesswasser enthaltenden Schmutz- und/oder Störstoffe erfolgt und eine Geruchsemission weitgehend reduziert wird. Die Kalkausfällung erfolgt dabei durch Verschieben des Kalk-Kohlensäure-Gleichgewichts, welche durch Zudosierung geeigneter Chemikalien, insbesondere eines pH-Einstellmittels, durch das der pH-Wert des Prozesswassers auf einen neutralen oder alkalischen Wert, welcher vorzugsweise zwischen 7 und 10, besonders bevorzugt zwischen 7 und 9 und ganz besonders bevorzugt zwischen 7,5 und 8,5 beträgt, eingestellt wird, erreicht wird. Zudem können dem Prozesswasser zu diesem Zweck auch Fällungs- und/oder Flockungshilfsmittel zugesetzt werden, um die Ausfällung von Kalk und die Bildung von Kalkflocken mit einer für eine effektive Abtrennung geeigneten Größe zu erleichtern. Zudem wird in der Druckentspannungsflotationsvorrichtung Druckgas, beispielsweise Druckluft, eingeführt, und die so erzeugte Mischung mit Druck beaufschlagt, bevor diese Mischung einem verminderten Druck ausgesetzt wird. Dadurch perlt das Druckgas aus der Mischung aus und strömt in Form kleiner Bläschen in der Vorrichtung nach oben, wodurch Feststoffe, insbesondere die gebildeten Kalkflocken, mitgerissen und aus dem Prozesswasser abgetrennt werden. Von der Kalkeliminationsvorrichtung 130a wird das so entkalkte, gereinigte Prozesswasser einer Filtrationseinheit 140a zugeführt, welche beispielsweise als Sandfiltrationseinheit ausgebildet ist, um das restliche partikuläre Material aus dem Prozesswasser zu entfernen. Zudem kann der Filtrationseinheit 140a eine Entsalzungseinheit (nicht dargestellt) nachgeschaltet sein.

Über die Rückführleitung 145a wird das in der Prozessaufbereitungseinheit 116a der ersten Stufe 101a der Altpapieraufbereitungsvorrichtung 100 gereinigte und entkalkte Prozesswasser in den Pulper bzw. Stoffauflöser 105 zurückgeführt.

Die aus der Entwässerungseinheit 115a der ersten Stufe 101a der Altpapieraufbereitungsvorrichtung 100 abgeführte, eingedickte Fasersuspension gelangt in die Sortierstufe 110b und von dort in eine Oxidationseinheit bzw. Reduktionseinheit 112, bevor die Fasersuspension in der Entwässerungseinheit 115b der zweiten Stufe 101b eingedickt wird, um aus der Fasersuspension so viel wie möglich des Prozesswassers zu entfernen. Analog zu der ersten Stufe 101a der Altpapieraufbereitungsvorrichtung 100 wird das in der Sortiervorrichtung 110b anfallende Prozesswasser und ein Teilstrom des in der Oxidationseinheit bzw. Reduktionseinheit 112 anfallenden Abwassers in die Rejektbehandlungseinheit 118b geführt und das dort anfallende Prozesswasser in die Stoffrückgewinnungseinheit 120b geleitet. Der andere Teilstrom des in der Oxidationseinheit bzw. Reduktionseinheit 112 anfallenden Prozesswassers sowie das in der Entwässerungseinheit 115b anfallende Prozesswasser werden direkt in die Stoffrückgewinnungseinheit 120b der Prozesswasseraufbereitungseinheit 116b der zweiten Stufe 101b der Altpapieraufbereitungsvorrichtung 100 geleitet und in der Prozesswasseraufbereitungseinheit 116b gereinigt sowie entkalkt. Das so behandelte Prozesswasser gelangt von der Filtrationseinheit 140b über die Leitung 170 und die Rückführleitung 145b größtenteils in die Sortiervorrichtung 110b zurück, wohingegen ein möglicher Überschuss an Prozesswasser über die Teilstromleitung 170a zu der ersten Stufe 101a der Altpapieraufbereitungsvorrichtung 100 zurückgeführt und in die zu dem Stoffauflöser 105 führende Rückführleitung 145a geleitet wird.

In der Papiermaschine 200 wird die kontinuierlich aus der Entwässerungseinheit 115b zugeführte, eingedickte Faserstoffsuspension mittels des Zentrifugalsortierers 202, in dem Teile mit einem höheren oder niedrigen spezifischen Gewicht als Wasser abgetrennt werden, der Feinsortiervorrichtung 204, der Papiermaschinen-Formpartie 206, der Papiermaschinen-Presspartie 208 und der Trockenpartie 210 zu Papier verarbeitet, Während das in den Anlagenteilen 202 und 204 anfallende Prozesswasser in die Rejektbehandlungseinheit 212 geführt wird, wird das in den Anlagenteilen 206 und 208 anfallende Prozesswasser in die Faserrückgewinnungseinheit 214 geleitet. Während die Rejekte in der Rejektbehandlungseinheit 212 entwässert werden, wird in der Faserrückgewinnungseinheit 214 das aus der Papiermaschinen-Formpartie 206 und der Papiermaschinen-Presspartie 208 stammende Prozesswasser vorentstofft und aus diesem Fasern abgetrennt. In der Rejektbehandlungseinheit 212 sowie in der Faserrückgewinnungseinheit 214 anfallendes Prozesswasser wird kontinuierlich in die Prozesswasseraufbereitungseinheit 216 der Papiermaschine 200 geleitet und durchströmt dort sequentiell die Entstoffungseinheit 220, den anaeroben Reaktor 225, die Kalkeliminationseinheit 230 und die Filtrationseinheit 240, welche wie die zuvor beschriebenen entsprechenden Anlagenteile der Prozesswasseraufbereitungseinheiten 116a, 116b der Altpapieraufbereitungsvorrichtung 100 arbeiten. Alternativ dazu kann das in der Rejektbehandlungseinheit 212 anfallende Prozesswasser als Abwasser aus der Anlage abgeführt werden und nur das in der Faserrückgewinnungseinheit 214 anfallende Prozesswasser kontinuierlich durch die Prozesswasseraufbereitungseinheit 216 der Papiermaschine 200 geleitet werden. Das aus der Filtrationseinheit 240 abgezogene, gereinigte und entkalkte Prozesswasser wird über die Rückführleitung 270 und die Teilstromleitung 270b größtenteils in den Zentrifugalsortierer 202 der Papiermaschine 200 zurückgeleitet, wohingegen ein möglicher Überschuss an Prozesswasser über die Teilstromleitung 270a in die aus der Filtrationseinheit 140b der zweiten Stufe 101b der Altpapieraufbereitungsvorrichtung 100 kommende Leitung 170 geleitet wird.

Ein vollkommen geschlossener Prozesswasserkreislauf wäre zwar grundsätzlich möglich, würde aber auf lange Sicht zu Anreicherungen von Störstoffen führen, die letztendlich die Wirtschaftlichkeit der Anlage beeinträchtigen würden. Daher wird dem Prozess, vorzugsweise der Papiermaschine 200, über die Frischwasserzufuhrleitung 280 kontinuierlich ein, bezogen auf die Menge an im Kreislauf geführten Prozesswasser, relativ geringer Anteil an Frischwasser zugeführt. Eine entsprechende Menge an Prozesswasser wird über die Abwasserleitung 300 aus dem Prozess entfernt und über die Entstoffungseinheit 305, die Kühleinheit 310 und die biologische Abwasserreinigungseinheit 315, welche auch eine Kalkeliminationseinheit und/oder Filtrationseinheit umfassen kann, weiter aufgereinigt, bevor dieser Strom als Abwasser in öffentliche Gewässer 400 abgeleitet wird. Zudem kann auch das, wie vorstehend erwähnt, optional aus den Rejektbehandlungseinheiten 118a, 118b, 212 abgeführte Abwasser über die Abwasserleitung 300 aus dem Prozess entfernt und über die Entstoffungseinheit 305, die Kühleinheit 310 und die biologische Abwasserreinigungseinheit 315 aufgereinigt werden.

Die in der Fig. 1 dargestellte Anordnung der Kalkeliminationseinheiten 130a, 130b, 230 ist insbesondere bei der Herstellung von graphischen Papieren bevorzugt, weil die Massefracht, d.h. die Feststoffkonzentration in dem Prozesswasser, vergleichsweise gering ist.

Bei der in der Fig. 1 gezeigten Ausführungsform handelt es sich um eine Anlage zur Herstellung von Papier aus Altpapier. Dabei sind die in der Fig. 1 gezeigten Stoffauflöser 105, Sortiereinrichtungen 110a, 110b, Entwässerungseinheiten 115a, 115b, Oxidationseinheit bzw. Reduktionseinheit 112, Zentrifugalsortierer 202, Feinsortiervorrichtung 204, Papiermaschinen-Formpartie 206 und Papiermaschinen-Presspartie 208 lediglich schematisch dargestellt und geben die Papierherstellungsanlage nicht im letzten Detail wider. Beispielsweise kann eine der beiden Sortiervorrichtungen 110a, 110b bzw. können beide Sortiervorrichtungen 110a, 110b auch mehrstufig ausgebildet sein und mithin eine Sequenz an Sortiereinrichtungen umfassen.

Genauso gut kann es sich bei der Anlage um eine Anlage zur Herstellung von Papier aus Frischfasern oder um jede beliebige andere Anlage handeln, in der wenigstens eine Prozesswasseraufbereitungseinheit vorgesehen ist, wobei wenigstens eine der Prozesswasseraufbereitungseinheiten einen mit anaeroben Mikroorganismen versetzten anaeroben Reaktor sowie eine Kalkeliminationseinheit aufweist. In dem letztgenannten Fall sind die in der Fig. 1 dargestellten Stoffauflöser 105, Sortiereinrichtungen 110a, 110b, Entwässerungseinheiten 115a, 115b, Oxidationseinheit bzw. Reduktionseinheit 112, Zentrifugalsortierer 202, Feinsortiervorrichtung 204, Papiermaschinen-Formpartie 206 und Papiermaschinen-Presspartie 208 durch entsprechende andere Vorrichtungen bzw. Vorrichtungsteile ersetzt.

In der Fig. 1 umfasst die Anlage eine zweistufige Stoffaufbereitung. Selbstverständlich ist es auch möglich, insbesondere bei der Herstellung von mehrlagigem Papier, zwei oder mehr parallele Stoffaufbereitungen vorzusehen.

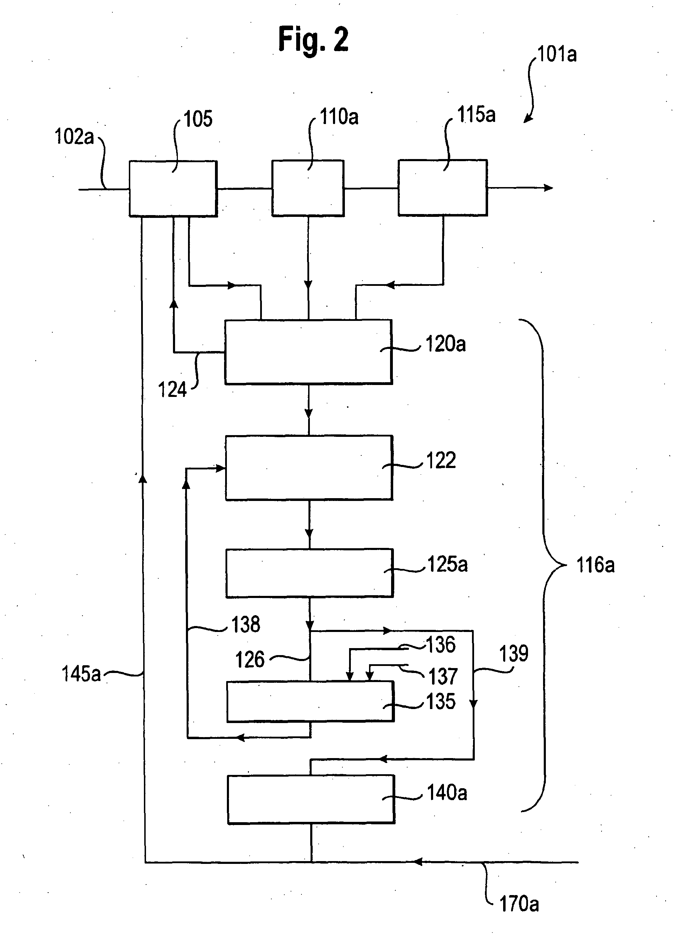

In der Fig. 2 ist eine schematische Ansicht einer Stufe 101a einer Altpapieraufbereitungsvorrichtung mit einer Prozesswasseraufbereitungseinheit 116a gemäß eines zweiten Ausführungsbeispiels der vorliegenden Erfindung dargestellt, welche die entsprechende Prozesswasseraufbereitungseinheit 116a der ersten Stufe 101a der Altpapieraufbereitungsvorrichtung . 100 der in der Fig. 1 dargestellten Anlage ersetzen kann. Alternativ dazu ist es auch möglich, alle Prozesswasseraufbereitungseinheiten 116a, 116b, 216 der in der Fig. 1 dargestellten Anlage jeweils durch eine in der Fig. 2 gezeigte Prozesswasseraufbereitungseinheit 116a zu ersetzen.

Die in der Fig. 2 gezeigte Stufe 101a weist im Unterschied zu der in der Fig. 1 gezeigten in der Prozesswasseraufbereitungseinheit 116a zusätzlich zu der Stoffrückgewinnungseinheit 120a eine Entstoffungseinheit 122 auf, welche zwischen der Stoffrückgewinnungseinheit 120a und dem anaeroben Reaktor 125a angeordnet ist. Von der Stoffrückgewinnungseinheit 120a führt eine Rückführleitung 124 in den Stoffauflöser 105 zurück.

Im weiteren Unterschied zu der in der Fig. 1 gezeigten Ausführungsform enthält die in der Fig. 2 gezeigte Stufe 101a keine Rejektbehandlungseinheit 118a. Alternativ dazu kann jedoch auch bei der in der Fig. 2 gezeigten Ausführungsform eine Rejektbehandlungseinheit (nicht dargestellt) vorgesehen sein, der über entsprechende Leitungen das in dem Stoffauflöser 105 anfallende Prozesswasser und ein Teilstrom des in der Sortiervorrichtung 110a anfallenden Prozesswassers zugeführt wird und aus der das in der Rejektbehandlungseinheit abgezogene Prozesswasser in die Stoffrückgewinnungseinheit 120a geleitet wird oder als Abwasser aus der Anlage entfernt wird.

Zudem ist in der Prozesswasseraufbereitungseinheit 116a. stromabwärts des anaeroben Reaktors 125a eine Fällungseinrichtung 135 vorgesehen, welche zwei Zufuhrleitungen 136, 137 aufweist, über welche der Fällungseinrichtung 135 pH-Einstellmittel; wie. Natronlauge, Fällungsmittel, wie Polyaluminiumchlorid, und/oder Flockungshilfsmittel, wie Polyacrylamid, zugeführt werden kann. Von dem anaeroben Reaktor 125a führt eine Bypassleitung 139 an der Fällungseinrichtung 135 vorbei in die Filtrationseinheit 140a und führt eine Teilstromleitung 126 zu der Fällungseinrichtung 135. Von der Fällungseinrichtung 135 ist eine Teilstromrückfuhrleitung 138 zu der Entstoffungseinheit 122 vorgesehen.

Beim Betrieb der in der Fig. 2 gezeigten Stufe 101a wird das in dem Stoffauflöser 105, in der Sortiervorrichtung 110a und in der Entwässerungseinheit 115a kontinuierlich anfallende Prozesswasser in die Stoffrückgewinnungseinheit 120a geleitet und von dort in die Entstoffungseinheit 122. Während in der Stoffrückgewinnungseinheit 120a gröbere Fasern zurückgehalten und über die Rückführleitung 124 in den Stoffauflöser 105 zurückgeleitet werden, wird das in der Stoffrückgewinnungseinheit 120a anfallende Prozesswasser in die Entstoffungseinheit 122 geleitet, in der aus dem Prozesswasser feines organisches und/oder anorganisches partikuläres Material abgetrennt werden. Aus der Entstoffungseinheit 122 wird das Prozesswasser kontinuierlich in den anaeroben Reaktor 125a geleitet. Ein Hauptstrom von wenigstens 50 % des aus dem anaeroben Reaktor 125a austretenden Prozesswassers wird über die Bypassleitung 139 in die Filtrationseinheit 140a und von dort über die Rückführleitung 145a in den Stoffauflöser 105 zurückgeführt. Der andere Teilstrom von weniger als 50% des aus dem anaeroben Reaktor 125a austretenden Prozesswassers wird über die Teilstromleitung 126 in die Kalkfällungseinrichtung 135 geleitet, welcher zudem über die Zufuhrleitungen 136, 137 pH-Einstellmittel sowie Fällungs- und/oder Flockungshilfsmittel zugeführt werden, um in dem Prozesswasser Kalk auszufällen. Der aus der Kalkfällungseinrichtung 135 austretende Teilstrom des Prozesswassers wird über die Teilstromrückfuhrleitung 138 in die als Mikroflotationsstufe ausgebildete Entstoffungseinheit 122 zurückgeführt, in welcher der ausgefällte Kalk aus dem Prozesswasser abgetrennt wird.

Diese Ausführungsform eignet sich insbesondere für die Herstellung von Tissue-Papier aus Altpapier.

Auch wenn die in der Fig. 2 dargestellte Ausführungsform mit Bezug zu einer Altpapieraufbereitungsanlage beschrieben wurde, kann die in der Fig. 2 dargestellte Prozesswasseraufbereitungseinheit 116a selbstverständlich auch in einer Anlage zur Herstellung von Papier aus Frischfasern oder jeder beliebigen anderen Anlage, in der wenigstens eine Prozesswasseraufbereitungseinheit vorgesehen ist, vorgesehen sein.

## Patentansprüche

1. Verfahren zur Aufbereitung von im Kreislauf geführten Prozesswasser bei der Papierherstellung umfassend wenigstens einen Prozesswasseraufbereitungsschritt, bei dem wenigstens ein Teil des dem Prozesswasseraufbereitungsschritt kontinuierlich zugeführten Prozesswassers einem Reinigungsschritt in einem mit anaeroben Mikroorganismen versetzten anaeroben Reaktor (125a, 125b, 225) sowie einem Entkalkungsschritt, bei dem das Prozesswasser einem Druckentspannungsflotationsschritt unterzogen wird, unterzogen wird, wobei das Verfahren in einer Anlage umfassend wenigstens eine Prozesswasseraufbereitungseinheit (116a, 116b, 216) durchgeführt wird, wobei wenigstens eine der Prozesswasseraufbereitungseinheiten (116a, 116b, 216) eine Filtrationseinheit (140a, 140b, 240), einen mit anaeroben Mikroorganismen versetzten anaeroben Reaktor (125a, 125b, 225) sowie eine Kalkeliminationseinheit (130a, 130b, 230) aufweist, wobei die Kalkeliminationseinheit (130a, 130b, 230) stromabwärts des anaeroben Reaktors (125a, 125b, 225) angeordnet ist und die Filtrationseinheit (140a, 140b, 240) stromabwärts der Kalkeliminationseinheit (130a, 130b, 230) sowie stromabwärts des anaeroben Reaktors (125a, 125b, 225) angeordnet ist.

2. Verfahren nach Anspruch 1,
**dadurch gekennzeichnet, dass**
das dem Prozesswasseraufbereitungsschritt kontinuierlich zugeführte Prozesswasser aus einer Stoffaufbereitungsvorrichtung (100) und/oder einer Papiermaschine (200) kommt.

3. Verfahren nach Anspruch 1 oder 2,
**dadurch gekennzeichnet, dass**
die Druckdifferenz zwischen der Druckbeaufschlagung und der Entspannung bei dem Druckentspannungsflotationsschritt wenigstens 2 bar, bevorzugt wenigstens 3 bar, besonders bevorzugt wenigstens 4 bar und ganz besonders bevorzugt wenigstens 5 bar beträgt.

4. Verfahren nach Anspruch 1,
**dadurch gekennzeichnet, dass**
die Anlage wenigstens eine Stoffaufbereitungsvorrichtung (100) und/oder wenigstens eine Papiermaschine (200) umfasst, wobei der wenigstens einen Stoffaufbereitungsvorrichtung (100) und/oder der wenigstens einen Papiermaschine (200) wenigstens eine der Prozesswasseraufbereitungseinheiten (116a, 116b, 216) umfassend einen mit anaeroben Mikroorganismen versetzten anaeroben Reaktor (125a, 125b, 225) sowie eine Kalkeliminationseinheit (130a, 130b, 230) zugeordnet ist.

5. Verfahren nach Anspruch 4,
**dadurch gekennzeichnet, dass**
die wenigstens eine Prozesswasseraufbereitungseinheit (116a, 116b, 216) der Anlage des weiteren eine Stoffrückgewinnungseinheit (120a, 120b, 220) und/oder eine Entstoffungseinheit (122) umfasst.

6. Verfahren nach einem der vorhergehenden Ansprüche,
**dadurch gekennzeichnet, dass**
die Druckentspannungsflotationsvorrichtung eine Fällungseinrichtung (135), in der durch Zugabe einer aus der aus pH-Einstellmitteln, Fällungsmitteln, Flockungshilfsmitteln und beliebigen Kombinationen hiervon bestehenden Gruppe ausgewählten Substanz Kalk aus dem Prozesswasser ausgefällt wird, und eine Kalkabtrenneinrichtung, in der ausgefällter Kalk aus dem Prozesswasser abgetrennt wird, umfasst, wobei die Fällungseinrichtung (135) und die Kalkabtrenneinrichtung jeweils stromabwärts des anaeroben Reaktors (125a, 125b, 225) angeordnet sind.

7. Verfahren nach einem der Ansprüche 4 bis 6,
**dadurch gekennzeichnet, dass**
die Stoffaufbereitungseinheit (100) 1 bis 3 Stufen (101a, 101b) und besonders bevorzugt zwei Stufen (101a, 101b) umfasst, welche untereinander durch eine Entwässerungsstufe (115a) voneinander entkoppelt sind.

8. Verfahren nach einem der Ansprüche 4 bis 7,
**dadurch gekennzeichnet, dass**
wenigstens eine der Stufen (101a, 101b) der Stoffaufbereitungsvorrichtung (100) und die Papiermaschine (200) jeweils eine eigene Prozesswasseraufbereitungseinheit (116a, 116b, 216) umfassen, wobei die Prozesswasseraufbereitungseinheiten (116a, 116b, 216) jeweils einen anaeroben Reaktor (125a, 125b, 225) sowie eine Kalkeliminationseinheit (130a, 130b, 230) aufweisen.

9. Verfahren nach einem der Ansprüche 4 bis 8,
**dadurch gekennzeichnet, dass**
die Anlage eine Abwasserreinigungsvorrichtung umfasst, über die ein Teil des Prozesswassers gereinigt und aus der Anlage abgeführt wird, wobei von der Abwasserreinigungsvorrichtung eine Teilstromleitung in die Stoffaufbereitungsvorrichtung (100) und/oder in die Papiermaschine (200) zurückführt.

## Claims

1. A method for the treatment of process water guided in a circuit in the manufacture of paper comprising at least one process water treatment step, wherein at least some of the process water continuously supplied to the process water treatment step is subjected to a purification step in an anaerobic reactor (125a, 125b, 225) charged with anaerobic microorganisms as well as to a deliming step in which the process water is subjected to a pressure relief flotation (dissolved air flotation) step, wherein the method is carried out in a plant comprising at least one process water treatment unit (116a, 116b, 216), wherein at least one of the process water treatment units (116a, 116b, 216) has a filtration unit (104a, 140b, 240), an anaerobic reactor (125a, 125b, 225) charged with anaerobic microorganisms as well as a lime elimination unit (130a, 130b, 230), wherein the lime elimination unit (130a, 130b, 230) is arranged downstream of the anaerobic reactor (125a, 125b, 225) and the filtration unit (140a, 140b, 240) is arranged downstream of the lime elimination unit (130a, 130b, 230) as well as downstream of the anaerobic reactor (125a, 125b, 225).

2. A method in accordance with claim 1, **characterized in that** the process water continuously supplied to the process water treatment step comes from a material preparation apparatus (100) and/or from a paper making machine (200).

3. A method in accordance with claim1 or claim 2, **characterized in that** the pressure difference between the pressurizing and the expansion in the pressure relief flotation step amounts to at least 2 bar, preferably at least 3 bar, particularly preferably at least 4 bar and very particularly preferably at least 5 bar.

4. A method in accordance with claim 1, **characterized in that** the plant includes at least one material preparation apparatus (100) and/or at least one paper making machine (200), wherein at least one of the process water treatment units (116a, 116b, 216) comprises an anaerobic reactor (125a, 125b, 225) charged with anaerobic microorganisms and a lime elimination unit (130a, 130b, 230) is associated with the at least one material preparation apparatus (100) and/or the at least one paper making machine (200).

5. A method in accordance with claim 4, **characterized in that** the at least one process water treatment unit (116a, 116b, 216) of the plant furthermore comprises a material recovery unit (120a, 120b, 220) and/or a material removal unit (122).

6. A method in accordance with any one of the preceding claims, **characterized in that** the pressure relief flotation apparatus includes a precipitation device (135) in which lime is precipitated from the process water by addition of a substance selected from the group including pH setting agents, precipitants, flocculation aids and any desired combinations thereof and a lime separation device in which precipitated lime is separated from the process water, with the precipitation device (135) and the lime separation device each being arranged downstream of the anaerobic reactor (125a, 125b, 225).

7. A method in accordance with any one of the claims 4 to 6, **characterized in that** the material preparation unit (100) comprises 1 to 3 stages (101a, 101b) and particularly preferably two stages (101a, 101b) which are mutually decoupled from one another by a deckering stage (115a).

8. A method in accordance with any one of the claims 4 to 7, **characterized in that** at least one of the stages (101a, 101b) of the material preparation apparatus (100) and the paper making machine (200) each include their own process water treatment unit (116a, 116b, 216), with the process water treatment units (116a, 116b, 216) each having an anaerobic reactor (125a, 125b, 225) as well as a lime elimination unit (130a, 130b, 230).

9. A method in accordance with any one of the claims 4 to 8, **characterized in that** the plant comprises a waste water purification apparatus via which some of the process water is purified and is drained out of the plant, with a part flow line leading back from the waste water purification apparatus into the material preparation apparatus (100) and/or into the paper making machine (200).

## Revendications

1. Procédé pour traiter de l'eau de traitement guidée dans le circuit lors de la fabrication du papier comprenant au moins une étape de traitement d'eau de traitement, dans lequel au moins une partie de l'eau de traitement amenée de façon continue à l'étape de traitement d'eau de traitement est soumise à une étape de nettoyage dans un réacteur (125a, 125b, 225) anaérobie, mélangé avec des micro-organismes anaérobies, et à une étape de détartrage, lors de laquelle l'eau de traitement est soumise à une étape de flottation de détente de pression, sachant que le procédé est mis en oeuvre dans une installation comprenant au moins une unité de traitement d'eau de traitement (116a, 116b, 216), au moins l'une des unités de traitement d'eau de traitement (116a, 116b, 216) présentant une unité de filtration (140a, 140b, 240), un réacteur (125a, 125b, 225) anaérobie, mélangé avec des micro-organismes anaérobies et une unité d'élimination de tartre (130a, 130b, 230), l'unité d'élimination de tartre (130a, 130b, 230c) étant disposée en aval du réacteur (125a, 125b, 225) anaérobie et l'unité de filtration (140a, 140b, 240) étant disposée en aval de l'unité d'élimination de tartre (130a, 130b, 230) et en aval du réacteur (125a, 125b, 225) anaérobie.

2. Procédé selon la revendication 1,
**caractérisé en ce que**
l'eau de traitement amenée de façon continue à l'étape de traitement d'eau de traitement provient d'un dispositif de traitement de matière (100) et/ou d'une machine à papier (200).

3. Procédé selon la revendication 1 ou 2,
**caractérisé en ce que**
la différence de pression entre l'alimentation en pression et la détente lors de l'étape de flottation de détente de pression est d'au moins 2 bars, de préférence d'au moins 3 bars, avec une préférence particulière d'au moins 4 bars et avec une préférence toute particulière d'au moins 5 bars.

4. Procédé selon la revendication 1,
**caractérisé en ce que**
l'installation comprend au moins un dispositif de traitement de matière (100) et/ou au moins une machine à papier (200), au moins l'une des unités de traitement d'eau de traitement (116a, 116b, 216) comprenant un réacteur (125a, 125b, 225) anaérobie, mélangé à des micro-organismes anaérobies, et une unité d'élimination de tartre (130a, 130b, 230) étant attribuée à au moins un dispositif de traitement de matière (100) et/ou à au moins une machine à papier (200).

5. Procédé selon la revendication 4,
**caractérisé en ce que**
l'au moins une unité de traitement d'eau de traitement (116a, 116b, 216) de l'installation comprend également une unité de recyclage de matière (120a, 120b, 220) et/ou une unité d'enlèvement de matière (122).

6. Procédé selon l'une quelconque des revendications précédentes,
**caractérisé en ce que**
le dispositif de flottation de détente de pression comprend un dispositif de précipitation (135), dans lequel du tartre provenant de l'eau de traitement est précipité par l'addition d'un ensemble constitué d'agents d'ajustage de pH, de précipitants, d'agents auxiliaires floculants et de combinaisons quelconques de ces produits, et un dispositif d'enlèvement de tartre, dans lequel du tartre précipité est éliminé de l'eau de traitement, le dispositif de précipitation (135) et le dispositif d'enlèvement de tartre étant disposés à chaque fois en aval du réacteur (125a, 125b, 225) anaérobie.

7. Procédé selon l'une quelconque des revendications 4 à 6,
**caractérisé en ce que**
le dispositif de traitement de matière (100) comprend 1 à 3 niveaux (101a, 101b) et avec une préférence particulière deux niveaux (101a, 101b), lesquels sont dissociés les uns des autres par un niveau de déshydratation (115a).

8. Procédé selon l'une quelconque des revendications 4 à 7,
**caractérisé en ce que**
au moins l'un des niveaux (101a, 101b) du dispositif de traitement de matière (100) et la machine à papier (200) ont chacun une propre unité de traitement d'eau de traitement (116a, 116b, 216), les unités de traitement d'eau de traitement (116a, 116b, 216) présentant chacune un réacteur (125a, 125b, 225) anaérobie et une unité d'élimination de tartre (130a, 130b, 230).

9. Procédé selon l'une quelconque des revendications 4 à 8,
**caractérisé en ce que**
l'installation comprend un dispositif de nettoyage d'eau usée, par lequel une partie de l'eau de traitement est nettoyée et évacuée de l'installation, une conduite de flux partiel étant recyclée par le dispositif de nettoyage d'eau usée dans le dispositif de traitement de matière (100) et/ou dans la machine à papier (200).
